# EUROPÄISCHE PATENTSCHRIFT

(11) **EP 3 077 465 B1**
(45) Veröffentlichungstag und Bekanntmachung des Hinweises auf die Patenterteilung: **29.11.2017**
(21) Anmeldenummer: 14811799.7
(22) Anmeldetag: 03.12.2014
(51) Int. Cl.: C09D 5/18, C09D 7/12, C09K 21/00, C08K 5/00, C08K 3/00, C08K 3/22

(54) **BESCHICHTUNGSSTOFF MIT BRANDSCHUTZEIGENSCHAFTEN**
COATING MATERIAL WITH FIREPROOFING PROPERTIES
SUBSTANCE DE REVÊTEMENT DOTÉE DE PROPRIÉTÉS IGNIFUGES

(30) Priorität: 04.12.2013 DE 102013113463
(43) Veröffentlichungstag der Anmeldung: 12.10.2016
(73) Patentinhaber: Strohlos Produktentwicklung GmbH, 17192 Waren/Müritz (DE)
(72) Erfinder: LOSEHAND, Christian, 17192 Waren/Müritz (DE)
(74) Vertreter: Garrels, Sabine
(86) Internationale Anmeldenummer: PCT/EP2014/076454
(87) Internationale Veröffentlichungsnummer: WO 2015/082561

(56) Entgegenhaltungen:
- EP-A1- 1 547 739
- WO-A1-2004/016712
- DE-A1- 10 123 584
- US-A1- 2003 054 103

## Beschreibung

Die Erfindung betrifft einen Beschichtungsstoff mit Brandschutzeigenschaften, welcher zur Beschichtung von diversen Oberflächen verwendet werden kann.

### Darstellung der Erfindung

Die Beschichtung unterschiedlichster Stoffe mit Beschichtungsstoffen ist bekannt. So kennt der Fachmann Pulver, Nasslacke und ähnliche Stoffe. Viele technische Geräte, aber auch Metallkomponenten von Möbeln bzw. Metallmöbel werden zur Verbesserung verschiedener Eigenschaften, z.B. der Lebensdauer, mit einer Beschichtung versehen. Inzwischen sind auch andere Materialien bekannt, welche mit einer entsprechenden Schicht überzogen werden können, z.B. auch Holz- oder Strohplatten. Pulver basiert zumeist auf Epoxid- oder Polyesterharzen, Lacke weisen neben Pigmenten Lösemittel, Harze und/oder Acrylate, sowie weiterer Additive auf.

Nachteil der Beschichtung nach dem Stand der Technik ist jedoch, dass die Beschichtungsmittel bei Hitzeeinwirkung, insbesondere bei Beflammung schon ab 750 bis 800 ° Celsius zu qualmen beginnen. Bei noch höheren Temperaturen entzündet sich z.B. Pulver, eine offene Flamme entsteht. In der Folge verkohlt das Pulver und perlt ab. So können schlimmstenfalls sogar weitere Gegenstände in Brand geraten. Insbesondere in hinsichtlich des Brandschutzes sensiblen Bereichen ist diese Eigenschaft natürlich unerwünscht.

Aber auch gerade dann, wenn man Stoffe mit guten Brandschutzeigenschaften benutzt, diese aber mit einer Pulverbeschichtung entweder hinsichtlich der Lebensdauer oder aber der Optik mit Hilfe einer Beschichtung verbessern möchte, sind leichter entzündliche Beschichtungsstoffe ungeeignet. Flammschutzmittel auf der Basis von einem bromierten und modifizerten Öl zur Verwendung in Lacken sind in DE10123584 A1 und WO2004/016712 A1 beschrieben.

### Ausführung der Erfindung

Aufgabe der Erfindung ist es daher, einen Beschichtungsstoff für die Beschichtung bereitzustellen, welcher gute Brandschutzeigenschaften aufweist, insbesondere nicht bei großer Hitze entflammt.

Erfindungsgemäß wird diese Aufgabe gelöst, indem der Beschichtungsstoff mit Brandschutzeigenschaften, basierend auf Harzen und/oder Acrylaten um eine Zugabe ergänzt wird, welche die Brandschutzeigenschaften herbeiführt. Bei dieser Zugabe handelt es sich um eine Mischung aus Nesselextrakt, Hanfextrakt und Kalziumoxid. Es können aber auch Extrakte von anderen Urticaceae oder anderen Hanfgewächsen genutzt werden. Auch der Einsatz anderer Erdalkalimetalloxide ist möglich.

Der Umfang der Zugabe kann 20 bis 50 Prozent des Gesamtvolumens des Beschichtungsstoffes mit Brandschutzeigenschaften umfassen. Damit die Beschichtung mit diesem Beschichtungsstoff mit Brandschutzeigenschaften möglich bleibt, sollte der Anteil der Zugabe einen Wert von 50 Prozent nicht übersteigen. Sobald die Zugabe weniger als 20 Prozent des Beschichtungsstoffes mit Brandschutzeigenschaften ausmacht, kann hingegen nicht mehr gewährleistet werden, dass ein Einwirken einer Flamme auf die Beschichtung nicht doch zu einer Entzündung führt. In der Praxis haben sich Gemische aus 55 bis 70 % herkömmlichen Beschichtungsstoffes und 45 bis 30 % Zugabe als wirksam gezeigt.

Auch die genannte Zugabe ist zur Sicherung der Brandschutzeigenschaften in einem bestimmten Mischungsverhältnis zusammenzuführen. Dabei bestimmt der Anteil der Extrakte aus schnell nachwachsenden Pflanzen, nämlich den Nessel- und den Hanfgewächsen, die Gesamtmischung, da die Extrakte 80 bis 98 Prozent der Zutaten ausmachen. Das Erdalkalimetalloxid nimmt hingegen nur 2 bis 20 % der Zugabe ein.

Bei der Mischung der Extrakte entfallen etwa vier Teile Nesselextrakt auf einen Teil Hopfenextrakt. Allerdings sind auch hier leichten Verschiebungen bis zu einen Mischungsverhältnis von drei zu eins bis fünf zu eins möglich. Das sollte davon abhängig gemacht werden, welche Weiterverarbeitungsmöglichkeiten vorgegeben sind.

Da es sich bei dem vorhergehenden, detailliert beschriebenen Beschichtungsstoff mit Brandschutzeigenschaften um ein Ausführungsbeispiel handelt, kann es in üblicher Weise vom Fachmann in einem weiten Umfang modifiziert werden. So ist es denkbar, jedoch nicht erfindungsgemäß, dass statt der Extrakte aus Urticaceae und Hanfgewächsen auch Extrakte anderer jährlich wachsender Pflanzen Anwendung finden, so z.B. Getreide- oder Maisstroh, Bambusstroh, Zuckerrohrstroh usw.. Erfindungsgemäß können auch Mischungen aus verschiedenen Extrakten der Urticaceae und Mischungen aus Extrakten verschiedener Hanfgewächse an Stelle der beschriebenen Extrakte treten. Ebenso kann der Beschichtungsstoff mit Brandschutzeigenschaften auch eine Mischung verschiedener Erdalkalimetalloxide beinhalten. Weiter schließt die Verwendung der unbestimmten Artikel "ein" bzw. "eine" nicht aus, dass die betreffenden Merkmale auch mehrfach vorhanden sein können.

## Patentansprüche

1. Pulver mit Brandschutzeigenschaften für die Pulverbeschichtung umfassend ein Pulver zur Pulverbeschichtung und eine Zugabe aus Extrakten von Urticaceae, Extrakten von Hanfgewächsen und Erdalkalimetalloxiden; oder Nasslack mit Brandschutzeigenschaften umfassend einen Nasslack und eine Zugabe aus Extrakten von Urticaceae, Extrakten von Hanfgewächsen und Erdalkalimetalloxiden.

2. Pulver mit Brandschutzeigenschaften oder Nasslack mit Brandschutzeigenschaften nach Anspruch 1, **dadurch gekennzeichnet, dass** das Pulver mit Brandschutzeigenschaften oder der Nasslack mit Brandschutzeigenschaften ein Mischungsverhältnis von 55 bis 70 Prozent vol. des Pulvers oder Nasslacks zur Beschichtung nach dem Stand der Technik und 30 bis 45 Prozent vol. der Zugabe aufweist.

3. Pulver mit Brandschutzeigenschaften oder Nasslack mit Brandschutzeigenschaften nach einem der vorhergehenden Ansprüche, **dadurch gekennzeichnet, dass** die Zugabe ein Mischungsverhältnis von 2 bis 20 Prozent vol. Erdalkalimetalloxid und 80 bis 98 Prozent vol. Extrakte aus Urticaceae und Hanfgewächsen.

4. Pulver mit Brandschutzeigenschaften oder Nasslack mit Brandschutzeigenschaften nach Anspruch 3, **dadurch gekennzeichnet, dass** auf drei bis fünf Anteile der Extrakte aus Urticaceae ein Anteil Extrakt aus Hanfgewächsen entfällt.

5. Pulver mit Brandschutzeigenschaften oder Nasslack mit Brandschutzeigenschaften nach einem der vorhergehenden Ansprüche, **dadurch gekennzeichnet, dass** das Erdalkalimetalloxid Kalziumoxid ist.

6. Pulver mit Brandschutzeigenschaften oder Nasslack mit Brandschutzeigenschaften nach einem der vorhergehenden Ansprüche, **dadurch gekennzeichnet, dass** der Extrakt aus Urticaceae Nesselextrakt ist.

7. Pulver mit Brandschutzeigenschaften oder Nasslack mit Brandschutzeigenschaften nach einem der vorhergehenden Ansprüche, **dadurch gekennzeichnet, dass** der Extrakt aus Hanfgewächsen Hanfextrakt ist.

## Claims

1. Powder having fire protection properties for powder coating, comprising a powder for powder coating and an addition comprising extracts of Urticaceae, extracts of Cannabaceae and alkaline earth metal oxides; or wet paint having fire protection properties, comprising a wet paint and an addition of extracts of Urticaceae, extracts of Cannabaceae and alkaline earth metal oxides.

2. Powder having fire protection properties or wet paint having fire protection properties according to Claim 1, **characterized in that** the powder having fire protection properties or the wet paint having fire protection properties has a mixing ratio of 55 to 70 per cent by volume of the powder or wet paint for coating according to the prior art, and 30 to 45 per cent by volume of the addition.

3. Powder having fire protection properties or wet paint having fire protection properties according to either of the preceding claims, **characterized in that** the addition has a mixing ratio of 2 to 20 per cent by volume of alkaline earth metal oxide and 80 to 98 per cent by volume of extracts of Urticaceae and Cannabaceae.

4. Powder having fire protection properties or wet paint having fire protection properties according to Claim 3, **characterized in that** there is one fraction of extract of Cannabaceae to three to five fractions of extracts from Urticaceae.

5. Powder having fire protection properties or wet paint having fire protection properties according to any of the preceding claims, **characterized in that** the alkaline earth metal oxide is calcium oxide.

6. Powder having fire protection properties or wet paint having fire protection properties according to any of the preceding claims, **characterized in that** the extract of Urticaceae is nettle extract.

7. Powder having fire protection properties or wet paint having fire protection properties according to any of the preceding claims, **characterized in that** the extract of Cannabaceae is hemp extract.

## Revendications

1. Poudre dotée de propriétés ignifuges pour le revêtement en poudre, comprenant une poudre pour le revêtement en poudre et un ajout d'extraits d'urticacées, d'extraits de cannabacées et d'oxyde de métaux alcalino-terreux ; ou vernis humide doté de propriétés ignifuges comprenant un vernis humide et un ajout d'extraits d'urticacées, d'extraits de cannabacées et d'oxyde de métaux alcalino-terreux.

2. Poudre dotée de propriétés ignifuges ou vernis humide doté de propriétés ignifuges selon la revendication 1, **caractérisé en ce que** la poudre dotée de propriétés ignifuges ou le vernis humide doté de propriétés ignifuges présente un rapport de mélange de 55 à 70 pour cent en volume de la poudre ou du vernis humide pour le revêtement selon l'état de la technique et 30 à 45 pour cent en volume de l'ajout.

3. Poudre dotée de propriétés ignifuges ou vernis humide doté de propriétés ignifuges selon l'une quelconque des revendications précédentes, caractérisé en ce l'ajout présente un rapport de mélange de 2 à 20 pour cent en volume d'oxyde de métal alcalino-terreux et 80 à 98 pour cent en volume d'extraits d'urticacées et de cannabacées.

4. Poudre dotée de propriétés ignifuges ou vernis humide doté de propriétés ignifuges selon la revendication 3, **caractérisé en ce qu'**une partie d'extrait de cannabacées est présentepour trois à cinq parties des extraits d'urticacées.

5. Poudre dotée de propriétés ignifuges ou vernis humide doté de propriétés ignifuges selon l'une quelconque des revendications précédente, **caractérisé en ce que** l'oxyde de métal alcalino-terreux est l'oxyde de calcium.

6. Poudre dotée de propriétés ignifuges ou vernis humide doté de propriétés ignifuges selon l'une quelconque des revendications précédente, **caractérisé en ce que** l'extrait d'urticacées est un extrait d'ortie.

7. Poudre dotée de propriétés ignifuges ou vernis humide doté de propriétés ignifuges selon l'une quelconque des revendications précédente, **caractérisé en ce que** l'extrait de cannabacées est un extrait de chanvre.
